# EUROPÄISCHE PATENTSCHRIFT

(11) **EP 0 760 537 B1**
(45) Veröffentlichungstag und Bekanntmachung des Hinweises auf die Patenterteilung: **31.05.2000**
(21) Anmeldenummer: 96113878.1
(22) Anmeldetag: 30.08.1996
(51) Int. Cl.: H01Q 1/00, H01Q 1/12

(54) **Glasantenne für Fahrzeugscheibe**
Glass antenna for vehicle window
Antenne de vitrage pour véhicule automobile

(30) Priorität: 02.09.1995 DE 19532431
(43) Veröffentlichungstag der Anmeldung: 05.03.1997
(73) Patentinhaber: Pilkington Automotive Deutschland GmbH, 58455 Witten (DE)
(72) Erfinder: Paulus, Peter Dr. Dipl.-Phys., 48167 Münster (DE); Baranski, Detlef. Dipl.-Ing., 45663 Recklinghausen (DE); Niklewski, Hans-Jürgen, 44879 Bochum (DE); Piorek, Helmut, 45968 Gladbeck (DE)
(74) Vertreter: Honke, Manfred, Dr.-Ing.

(56) Entgegenhaltungen:
- EP-A- 0 332 898
- EP-A- 0 561 272
- DE-A- 4 447 134

## Beschreibung

Die Erfindung betrifft ein Kraftfahrzeug, insbesondere ein Personenkraftfahrzeug, mit metallischer Karosserie und zumindest einer Fensteröffnung in der Karosserie, in welcher Fensteröffnung eine Antennenscheibe angeordnet ist. - Die Antennenscheiben moderner Kraftfahrzeuge müssen in bezug auf den Empfang und auf das Senden elektromagnetischer Wellen extremen Anforderungen genügen, und zwar als Breitbandantennen, d. h. in einem weiten Frequenzbereich mit unterschiedlicher Polarisation der elektromagnetischen Wellen einwandfrei arbeiten. Die hohen Anforderungen gelten sowohl in energetischer Hinsicht als auch in bezug auf die Geometrie der Strahlungs- bzw. Empfangscharakteristik. Die typischen Frequenzbereiche, die es zu beherrschen gilt, sind die folgenden: Lang-, Mittel- und Kurzwellenbereich, auch AM-Bereich genannt (150 kHz - 30 MHz); VHF-Bereich für Rundfunk- und Fernsehempfang (30 - 300 MHz); UHF-Bereich für den Fernsehempfang, für Mobilfunk, Satellitenempfang (GPS oder dgl.), Fernsteuereinrichtungen etc. (300 MHz - 2 GHz). Die Praxis kennt Antennenscheiben für Kraftfahrzeuge, bei denen die Antennenelemente drahtförmige oder aufgedruckte/eingebrannte Leiter sind oder bei denen die Antennenelemente aus einer elektrisch leitfähigen Beschichtung bestehen. Für viele bekannte Ausführungsformen gilt, daß sie allenfalls in relativ schmalen Bandbereichen über hinreichende Sende- bzw. Empfangseigenschaften verfügen.

Bei den Kraftfahrzeugen, von denen die Erfindung ausgeht (vgl. zum Beispiel US 5,355,144, DE-PS 37 43 099), ist die Antennenscheibe eine Verbundsicherheitsglasscheibe mit Innenscheibe, Außenscheibe und Verbundschicht, wobei auf/in der Antennenscheibe eine optisch transparente elektrisch leitfähige Beschichtung vorgesehen ist. Diese leitende Beschichtung weist im eingebauten Zustand einen verhältnismäßig breiten, umlaufenden Abstand von dem Rand der Fensteröffnung und damit von der metallischen Karosserie auf. Es findet dadurch eine sehr weitgehende Entkopplung der gesamten metallischen Beschichtung von der Karosserie des Kraftfahrzeuges statt. Die Auskopplung bzw. die Einspeisung erfolgt mit Hilfe von Koaxialkabeln. Untersuchungen haben ergeben, daß die Sende-/Empfangseigenschaften in energetischer Hinsicht, aber auch in bezug auf die Richtcharakteristik, verbesserungsfähig sind. Das gilt insbesondere dann, wenn die Antennenscheibe für den Empfang oder das Senden in einem breiten Bandbereich eingesetzt werden soll.

Andererseits sind Kraftfahrzeuge bekannt, bei denen die Fensterscheiben mit elektrisch leitfähigen Sonnenschutzbeschichtungen, z. B. auf Basis von Edelmetallschichten oder halbleitenden Metalloxidschichten, ausgerüstet sind. Die Sonnenschutzbeschichtungen werden entweder direkt auf die zur Herstellung der Fensterscheiben verwendeten Glasscheiben aufgebracht oder auf dünne transparente Folien, z. B. aus PET, die mit Hilfe von Verbundschichten mit den Glasscheiben verbunden, insbesondere zwischen zwei Glasscheiben eingelegt werden. Die genannten Sonnenschutzbeschichtungen werden üblicherweise ganzflächig aufgebracht, reichen also bis zum Rand der Fernsterscheiben. Sonnenbeschichtung meint in diesem Zusammenhang alle elektrisch leitfähigen Beschichtungen, welche die Sonneneinstrahlung zumindest in einem Teilbereich des Sonnenspektrums deutlich reduzieren. Für Kraftfahrzeuge, die Fensterscheiben mit derartigen Sonnenschutzbeschichtungen aufweisen, gibt es bislang keine befriedigenden Lösungen, um diese Fensterscheiben als Antennenscheiben mit guter Empfangsund/oder Sendequalität über einen breiten Bandbereich nutzen zu können, ohne daß die Sonnenschutzwirkung nennenswert beeinträchtigt wird oder der optische Eindruck insgesamt leidet.

Der Erfindung liegt das technische Problem zugrunde, bei einem Kraftfahrzeug des eingangs beschriebenen Aufbaus den Empfang bzw. das Senden von elektromagnetischen Wellen über einen breiten Bandbereich zu verbessern, und zwar sowohl in energetischer Hinsicht, als auch in bezug auf die Geometrie der Antennencharakteristik, d. h. der Empfangs- bzw. Sendecharakteristik. Darüber hinaus soll diese Verbesserung auf einfache Weise und mit einfachen Mitteln erreicht werden, die eine industrielle Serienfertigung problemlos zulassen. Die Antennenscheibe des Kraftfahrzeugs soll dabei gleichzeitig über gute Sonnenschutzeigenschaften und eine möglichst ungestörte Reflexions-/Transmissionsoptik verfügen.

Zur Lösung dieses technischen Problems ist Gegenstand der Erfindung ein Kraftfahrzeug, insbesondere ein Personenkraftfahrzeug, mit metallischer Karosserie und zumindest einer Fensteröffnung in der Karosserie, in welcher Fensteröffnung eine Antennenscheibe angeordnet ist, - mit den Merkmalen:
1.1) Die Antennenscheibe besitzt eine Innenscheibe, eine Außenscheibe, eine Verbundschicht und eine optisch transparente, elektrisch leitfähige Sonnenschutzbeschichtung,
1.2) im Bereich von zumindest einem Rand der Antennenscheibe bildet die Sonnenschutzbeschichtung zum entsprechenden Rand der Fensteröffnung hin einen streifenförmigen Schlitzbereich,
1.3) zumindest an einem der gemäß Merkmal 1.2) verbleibenden Ränder der Antennenscheibe ist die Sonnenschutzbeschichtung bis zum Rand der Antennenscheibe geführt und überlappt den entsprechenden Randbereich der Fensteröffnung,
wobei die gemäß Merkmal 1.3) den Randbereich der Fensteröffnung überlappende Sonnenschutzbeschichtung mit der Karosserie hochfrequenzleitend verbunden und der Schlitzbereich zwischen der Sonnenschutzbeschichtung und dem entsprechenden Rand der Fensteröffnung als Schlitzantenne in der Kraftfahrzeugkarosserie geschaltet ist. - Schlitzantenne (slot radiator) ist in der Hochfrequenztechnik, insbesondere im Bereich der eingangs beschriebenen Frequenzen, ein wohl definierter Gegenstand. Schlitzantenne bezeichnet einen Schlitz von bestimmter Länge und Breite in einer leitenden Ebene oder in einem umgebenden leitenden Schirm, der als Empfangsantenne oder Sendeantenne angeregt wird. Das magnetische Feld einer Schlitzantenne entspricht zum Beispiel dem elektrischen Feld eines Dipols entsprechender Länge, das elektrische Feld einer Schlitzantenne entspricht dem magnetischen Feld eines Dipols. Schlitzantennen werden zumeist einkoppelnd oder auskoppelnd an Koaxialkabel angeschlossen, wobei Innenleiter und Außenleiter an gegenüberliegenden Punkten des Schlitzes mit dem umgebenden leitenden Schirm verbunden werden. Diese Definition einer Schlitzantenne gilt auch im Rahmen der Erfindung mit der Maßgabe, daß der eine Rand des Schlitzes durch den Rand der Fensteröffnung gegeben ist, der andere Rand durch den Rand der Sonnenschutzbeschichtung oder durch eine hochfrequenztechnisch analoge Ausbildung der Sonnenschutzbeschichtung oder an der Sonnenschutzbeschichtung in diesem Bereich. Die vorstehend beschriebene Maßgabe definiert zugleich das Merkmal Schlitzbereich in der Lehre der Erfindung, welcher Schlitzbereich im übrigen unterschiedlich gestaltet sein kann, wie weiter unten erläutert wird.

Überlappen meint im Rahmen der Erfindung sowohl Unterfassen als auch Überfassen. Der Schlitzbereich gemäß Merkmal 1.2) ist vorzugsweise ein Bereich ohne Sonnenschutzbeschichtung. Es kann sich aber auch um einen Bereich mit Beschichtung handeln, der zur Reduzierung der Hochfrequenzleitfähigkeit nachträglich mechanisch, chemisch oder auch durch Bestrahlung behandelt wurde. Er ist bevorzugt im Bereich des oberen Randes der Antennenscheibe angeordnet. Er kann sich aber auch entlang eines der Seitenränder oder entlang des unteren Randes erstrecken. Die Antennenscheibe kann als eine Verbundsicherheitsglasscheibe ausgeführt sein, die zwei Glasscheiben aufweist und im übrigen wie beschrieben aufgebaut ist. Der Ausdruck Antennenscheibe umfaßt im Rahmen der Erfindung unter anderem Scheibenaufbauten der Form Außenglasscheibe/Verbundfolie/Innenscheibe. Dabei kann die Innenscheibe auch als Kunststoffscheibe oder Kunststoffolie ausgeführt sein. Die Sonnenschutzbeschichtung ist bei der erfindungsgemäßen Antennenscheibe an beliebiger Stelle zwischen der Außenglasscheibe und der Innenoberfläche der Innenscheibe angeordnet und als Glasbeschichtung oder beschichtete Folie ausgeführt. Sie weist einen Flächenwiderstand von einigen Ohm bis deutlich unter 100 Ohm auf. Der als Schlitzantenne wirkende Schlitzbereich ist in seiner einfachsten Form nur an einem Scheibenrand vorgesehen, vorzugsweise am oberen Rand. Er wird gegebenenfalls ergänzt durch weitere Schlitzbereiche, so daß sich beispielsweise eine L- oder U-förmige Schlitzantenne bildet. Produktionstechnisch am einfachsten ist es, wenn die Schlitzbereiche jeweils entlang eines kompletten Randes verlaufen. Sie können aber auch kürzer sein. Dabei kann es im Einzelfall angebracht sein, den Schlitzbereich asymmetrisch zur Scheibenmittelachse verlaufen zu lassen.

Es liegt im Rahmen der Erfindung, als randseitige Begrenzung des Schlitzbereiches einen schmalen leitfähigen Randstreifen auf einer der Glasscheiben vorzusehen, der mit dem Rand der Fensteröffnung überlappt und damit einen (virtuellen) Masseleiter bildet.

Kraftfahrzeugscheiben, die auch als Verbundsicherheitsglasscheiben ausgeführt sein mögen und die eine Schlitzantenne aufweisen, sind bekannt (EP 0 332 898 B1). Der Schlitz ist in der mit Sammelschienen versehenen metallischen Beschichtung ausgespart und verläuft im eingebauten Zustand der Kraftfahrzeugscheibe horizontal oder in der Mitte der Kraftfahrzeugscheibe von oben nach unten. Auch hier erfolgt die Auskopplung oder Einspeisung von Koaxialleitern. Gegebenenfalls ist ein umlaufender Abstand zwischen der metallischen Beschichtung und dem Rand der Fensteröffnung bzw. einem Fensterrahmen oder der Karosserie vorgesehen. Die Anordnung von Schlitzen im Sichtbereich von Fahrzeugscheiben verursacht dort eine deutlich sichtbare Veränderung der optischen Eigenschaften und ist ästhetisch unbefriedigend. Auch ist die Auskopplung/Einspeisung erschwert. Dabei ist es auch bekannt, den vorbeschriebenen umlaufenden Schlitzbereich zwischen der metallischen Beschichtung und der Karosserie als Schlitzantenne einzusetzen. Das ist jedoch eine Schlitzantenne, die geschlossen rahmenförmig, gleichsam als Rahmenantenne in Form eines Schlitzes, umläuft. Sie soll im UKW-Frequenzbereich wirksam sein. Demgegenüber sind erfindungsgemäß die Schlitzantennen in bezug auf den Rand der Fensteröffnung randnah angeordnete streifenförmige Elemente mit endlicher Länge, während die Sonnenschutzbeschichtung im übrigen an die Karosserie hochfrequenzleitend angeschlossen ist. Hochfrequenzleitend bezeichnet eine kapazitive und/oder induktive Ankopplung, schließt aber auch einen galvanischen Anschluß, ggf. mit besonderen Übergangswiderständen, nicht aus. Der Schlitzbereich selbst ist ein Bereich, der eine Hochfrequenzleitfähigkeit nicht aufweist oder dessen Hochfrequenzleitfähigkeit für den Schlitzantenneneffekt ausreichend reduziert ist.

Die Erfindung beruht auf der Erkenntnis, daß eine scheibenförmige Antenne, wie sie erfindungsgemäß durch die Sonnenschutzbeschichtung, den streifenförmigen Schlitzbereich und die in der beschriebenen Art und Weise ausgebildete hochfrequenzleitende Verbindung mit der Karosserie verwirklicht ist, sich physikalisch anders verhält als eine Antenne aus einer leitenden Beschichtung, die einen Schlitz im Sichtbereich und/oder einen umlaufenden Abstand von der Kraftfahrzeugkarosserie aufweist. Erfindungsgemäß wird die Karosserie des Kraftfahrzeuges im elektromagnetischen Feld zu einem Teil des elektromagnetischen Systems. Die Tatsache, daß erfindungsgemäß zumindest an einem der Ränder der Antennenscheibe die Sonnenschutzbeschichtung bis zum Rand der Antennenscheibe geführt ist, sowie die bereichsweise Überlappung des Randbereichs der Fensteröffnung durch die Sonnenschutzbeschichtung schaffen besondere Randbedingungen für das durch die Maxwell'schen Gleichungen bestimmte Feld in der Sonnenschutzbeschichtung, in der Karosserie und in dem Schlitzbereich. Diese Randbedingungen beeinflussen den Empfang der elektromagnetischen Wellen und deren Emission. Dabei zeigt die durch den streifenförmigen Schlitzbereich gebildete Schlitzantenne besonders gute Empfangseigenschaften im VHF-Bereich. Die Empfangseigenschaften im Bereich höherer Frequenzen und im AM-Bereich können noch weiter verbessert werden, indem in dem streifenförmigen Schlitzbereich zumindest ein auf den jeweiligen Frequenzbereich abgestimmtes flächenförmiges oder linienförmiges Antennenelement angeordnet ist, z. B. in Form eines Monopols oder Dipols.

Überraschenderweise können die Schlitzantenne und derartige Einzelantennen innerhalb des Schlitzes problemlos kombiniert werden, ohne daß störende gegenseitige Beeinflussungen beobachtet werden.

Im Bereich der Antennenscheibe wirkt eine komplexe Impedanzmatrix, die ihre Empfangs-/Sendeeigenschaften und ihre Strahlungscharakteristik beeinflußt. Durch die Einstellung der Breite und der Länge des Schlitzbereiches sowie die eventuelle Anordnung zusätzlicher Antennenelemente in diesem Schlitzbereich läßt sich die Antennenfunktion der Antennenscheibe optimieren, ohne daß die Sonnenschutzeigenschaften oder die Reflexions-/Transmissionsoptik nennenswert beeinträchtigt werden. Es liegt im Rahmen der Erfindung, den streifenförmigen Schlitzbereich durch einen elektrisch nicht leitfähigen opaken Siebdruckrandstreifen oder dergleichen abzudecken, wie er üblicherweise auf modernen Fahrzeugscheiben sowieso zum Abdecken des Scheibenrandbereichs vorgesehen ist. Alternativ dazu kann eine Verbundfolie verwendet werden, die im Bereich des Schlitzbereichs einen Farbkeil (Graukeil, Grünkeil) aufweist. Die Erfindung verbessert die Antennenscheiben auf einfache Weise. Es sind zur Verwirklichung der Lehre der Erfindung gegenüber dem Stand der Technik andere Maßnahmen als eine geeignete Einrichtung, Ausbildung oder Anordnung der Sonnenschutzbeschichtung bzw. der die Sonnenschutzbeschichtung tragenden Folie nicht erforderlich.

Im einzelnen bestehen im Rahmen der Erfindung verschiedene Möglichkeiten der weiteren Ausbildung und Gestaltung des Kraftfahrzeuges. Nach bevorzugter Ausführungsform der Erfindung weist die Antennenscheibe eine Verbundschicht aus einer ersten Verbundfolie, einer Folie mit elektrisch leitfähiger, insbesondere metallischer Sonnenschutzbeschichtung und einer zweiten Verbundfolie auf, wobei die Folie mit der Sonnenschutzbeschichtung nach Maßgabe der schon erläuterten Lehre der Erfindung eingerichtet ist. Die Verbundfolien bestehen aus üblichen Werkstoffen. Das gilt auch für die Folie, die die Sonnenschutzbeschichtung trägt. Die Verbundfolien bestehen beispielsweise aus PVB oder EVA, die Sonnenschutzbeschichtung ist beispielsweise auf eine PET-Folie aufgebracht. Für übliche Kraftfahrzeuge hat es sich bewährt, daß der Schlitzbereich vom Rand der Sonnenschutzbeschichtung bis zum Rand der Fensteröffnung eine Schlitzantennenbreite von 3 mm bis 200 mm, vorzugsweise von etwa 60 mm, aufweist. Der Schlitzbereich besitzt in diesem Falle zweckmäßigerweise eine Länge von zumindest 400 mm, er ist vorzugsweise symmetrisch in bezug auf die Mitte der Fensteröffnung angeordnet. Der Schlitzbereich kann sich von einem Rand der Antennenscheibe zum gegenüberliegenden erstrecken, er kann aber auch in - gegebenenfalls unterschiedlicher - Entfernung von diesen Rändern enden.

Eine besonders einfach zu verwirklichende Ausführungsform einer erfindungsgemäßen Schlitzantenne läßt sich dadurch herstellen, daß die Sonnenschutzbeschichtung an drei der vier Ränder der Antennenscheibe bis zu deren Rand geführt ist und die zugeordneten Randbereiche der Fensteröffnung überlappt. Im Rahmen der Erfindung liegt es, einen im Bereich des oberen Randes der Antennenscheibe vorhandenen Schlitzbereich zwischen der Sonnenschutzbeschichtung und dem Rand der Fensteröffnung zum unteren Rand der Fensteröffnung hin entlang der seitlichen Ränder unter Bildung von weiteren streifenförmigen Schlitzbereichen zu verlängern.

Es liegt im Rahmen der Erfindung, entlang eines Schlitzbereiches mehrere Einspeisungs-/Auskopplungs-Einrichtungen vorzusehen. Diese Ausführungsform empfiehlt sich insbesondere, wenn die Antennenscheibe einem Diversity-System angehört. Es können dann die vorgenannten Einrichtungen an die Diversity-Schaltung angeschlossen werden. Die Auskopplung/Einspeisung von Antennensignalen kann grundsätzlich auf verschiedene Weise erfolgen. Bewährt hat sich eine Ausführungsform, bei der eine als flächige Elektrode ausgeführte kapazitive Auskopplungs-/Einspeisungs-Einrichtung vorgesehen ist, die benachbart zum Schlitzbereich überlappend mit der Sonnenschutzbeschichtung angeordnet ist und ein Koaxialkabel aufweist, dessen Mantel mit der Karosserie verbunden ist. Alternativ kann auch in unmittelbarer Nähe des Auskopplungs-/Einspeisungsortes ein mit der Karosserie massenseitig verbundener Verstärker vorgesehen sein. Die Auskopplungs-/Einspeisungs-Einrichtung kann mit einem Leiterteil den Schlitzbereich überqueren. Die Auskopplungs-/Einspeisungs-Einrichtung kann auch aus in den Bereich der Sonnenschutzbeschichtung hineinragenden streifenförmigen oder linienförmigen Leitern bestehen.

Je nach den Vorgaben, die in bezug auf die Frequenzen und die Dimensionen des Kraftfahrzeuges berücksichtigt werden müssen, genügt es, daß die Antennenscheibe eine einzige Auskopplungs-/Einspeisungs-Einrichtung aufweist, die vorzugsweise im Bereich der Längsmitte des Schlitzbereichs angeordnet ist. Die Antennenscheibe kann aber auch zwei oder mehr Auskopplungs-/Einspeisungs-Einrichtungen aufweisen, die längs des Schlitzbereiches angeordnet sind. Dabei bestimmen die Schlitzgeometrie sowie der Ort/die Orte der Auskopplung/Einspeisung primär die Sende-/Empfangseigenschaften und die räumliche Sende-/Empfangscharakteristik, während bei kapazitiver Auskopplung/Einspeisung über die Dimensionierung der Elektrodenfläche eine Impedanzanpassung möglich ist.

Im Rahmen der Erfindung liegt es - wie bereits erwähnt -, in dem Schlitzbereich eine AM-Antenne zusätzlich anzuordnen, die sich zumindest über einen Teil der Länge des Schlitzbereiches erstreckt. Im Rahmen der Erfindung liegt es fernerhin, in dem Schlitzbereich bzw. in den Schlitzbereichen zusätzlich Antennenelemente für VHF-Frequenzen und UHF-Frequenzen anzuordnen. Dabei ist darauf zu achten, daß diese Antennenelemente - abgesehen von eventuell vorhandenen virtuellen Masseleitern - weder mit der Karosserie noch mit der Sonnenschutzbeschichtung überlappen, da dies die Empfangs-/Sendeeigenschaften des Antennensystems verschlechtern würde. Nach bevorzugter Ausführungsform wird man im Rahmen der heute üblichen Verhältnisse die Schlitzantenne bzw. die Schlitzantennen für einen Frequenzbereich von etwa 50 bis 300 MHz und die zusätzlichen Antennenelemente für den Frequenzbereich von etwa 300 MHz bis 2 GHz auslegen. Es versteht sich, daß bei kleinen Antennenscheiben, zum Beispiel bei Dreieck-Seitenscheiben die Frequenzbereiche sich verschieben können. Die Auskopplung-/Einspeisung der Schlitzantenne und der zusätzlichen Antennenelemente kann zur Reduzierung des Verkabelungsaufwands über eine gemeinsame Auskopplungs/Einspeisungs-Einrichtung erfolgen, es ist aber auch möglich, für jede Antenne eine separate Auskopplungs-/Einspeisungs-Einrichtung vorzusehen.

Im Rahmen der Erfindung kann die Sonnenschutzbeschichtung zusätzlich als Heizfeld mit Gleichstrombeheizung geschaltet sein. Es besteht aber auch die Möglichkeit, im Sichtbereich elektrisch isoliert von der Sonnenschutzbeschichtung zusätzlich Heizleiter anzuordnen.

Im folgenden wird die Erfindung anhand einer lediglich ein Ausführungsbeispiel darstellenden Zeichnung ausführlicher erläutert. Es zeigen in schematischer Darstellung
- Fig. 1: die Frontansicht eines Kraftfahrzeuges mit als Antennenscheibe ausgeführter Windschutzscheibe,
- Fig. 2: die Antennenscheibe aus dem Gegenstand nach Fig. 1 in gegenüber der Fig. 1 vergrößerter Darstellung,
- Fig. 3: einen Schnitt in Richtung A-A durch den Gegenstand der Fig. 2 in nochmaliger Vergrößerung und ausschnittsweise mit zusätzlichen AM-Antennenleitern,
- Fig. 4: den Gegenstand nach Fig. 2 mit zusätzlichen AM-Antennenleitern und Heizleitern,
- Fig. 5: eine andere Ausführungsform des Gegenstandes der Fig. 4,
- Fig. 6: eine weitere Ausführungsform des Gegenstandes der Fig.4 mit zusätzlichen seitlichen Schlitzbereichen,
- Fig. 7: den Gegenstand nach Fig. 4 mit zusätzlichen Antennenelementen, die
- Fig. 8 und 9: nochmals andere Ausführungsformen und
- Fig. 10: in Anlehnung an Fig. 2 eine Ausführungsform, die einem parametrischen Diversity-System angehört.

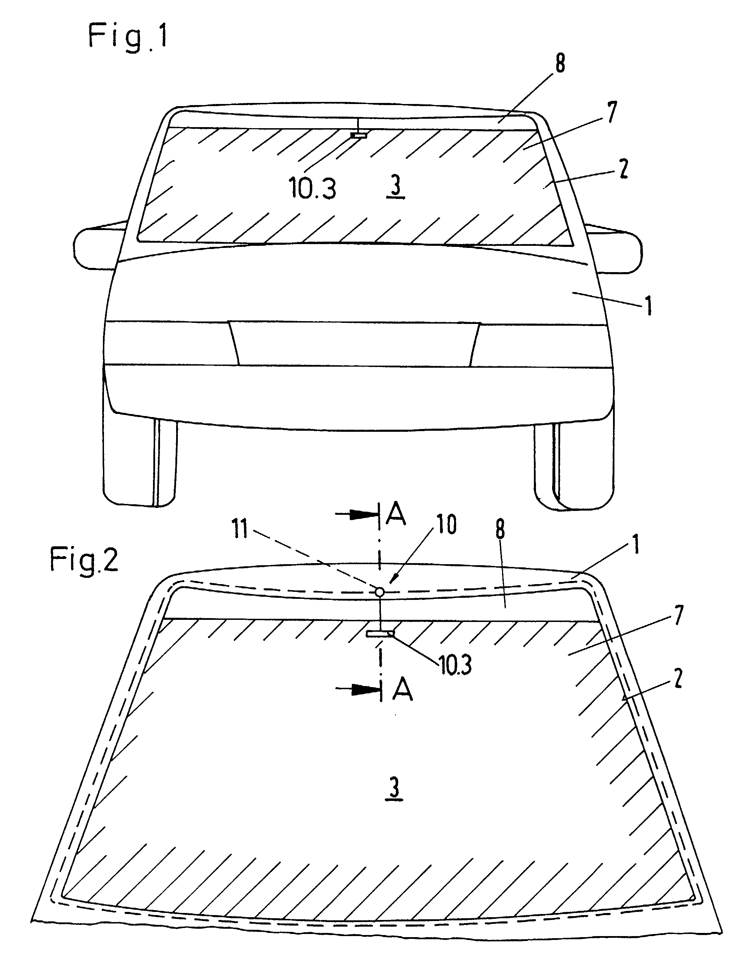

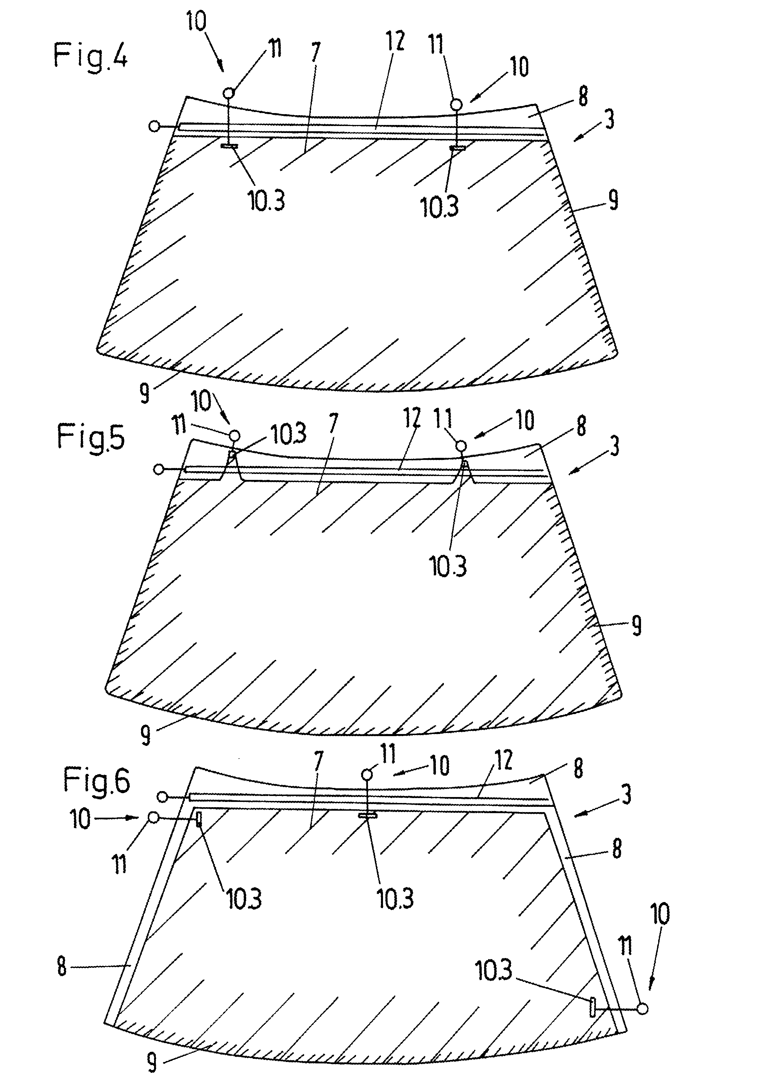

Das in Fig. 1 dargestellte Kraftfahrzeug ist ein Personenkraftfahrzeug mit metallischer Karosserie 1 und mit einer Fensteröffnung 2, in der sich die Front- oder Rückwandscheibe befindet. Diese ist zugleich als Antennenscheibe 3 ausgeführt. In der Fig. 2 erkennt man im Bereich der Fensteröffnung Randteile der Karosserie. Der Bereich, in dem die Antennenscheibe 3 den Rand der Karosserie überlappt, wurde durch eine gestrichelte Linie angedeutet. In den Fig. 4 bis 9 wurden die Randteile der Karosserie im Bereich der Fensteröffnung nicht mehr gezeichnet.

In der Fig. 3 erkennt man einen Teilbereich der Karosserie 1 mit Fensteröffnung 2. Die dargestellte Antennenscheibe 3 ist eine Verbundsicherheitsglasscheibe mit Innenscheibe 4, Außenscheibe 5, Verbundschicht 6 und Folie mit metallischer Sonnenschutzbeschichtung 7. Die Erfindung ist nicht auf Kraftfahrzeuge mit Verbundsicherheitsglasscheibe beschränkt. Die Antennenscheibe 3 ist mit Hilfe eines Klebers 3.1 in die Fensteröffnung 2 eingesetzt. Am Rand der Außenglasscheibe 5 befindet sich ein opaker Siebdruckrand 5.1. Zwischen dem Rand der Fensteröffnung 2 und dem Rand der Sonnenschutzbeschichtung 7 ist der Schlitzbereich 8 angeordnet. Im Schlitzbereich 8 sind im Schnitt zwei AM-Antennenleiter 12 angedeutet. Das Koaxialkabel 10 führt zum Sender/Empfänger oder Verstärker. Sein Mantel 11 ist über den Leiter 10.1 mit der Karosserie 1 verbunden und dadurch geerdet. Der Leiter 10.2 ist mit einer Einspeisungs-/Auskopplungs-Elektrode 10.3 versehen und an der Innenglasscheibe 4 befestigt.

Aus einer vergleichenden Betrachtung der Fig. 1 und 2 sowie aus den weiteren Figuren entnimmt man, daß im Bereich des Oberrandes der Antennenscheibe 3 die Sonnenschutzbeschichtung 7 zum oberen Rand der Fensteröffnung 2 hin einen unbeschichteten streifenförmigen Schlitzbereich 8 besitzt. Die Anordnung ist fernerhin so getroffen, daß die Sonnenschutzbeschichtung 7, abgesehen vom Schlitzbereich 8, bis zum Rand der Antennenscheibe 3 geführt ist und die entsprechenden Bereiche der Fensteröffnung 2 überlappt. Dieser Überlappungsbereich 9 wurde in den Fig. 4 bis 9 durch eine besondere Schraffur angedeutet. In den Fig. 1 bis 5 und 7 ist die Sonnenschutzbeschichtung 7 bis an alle Ränder der Antennenscheibe 3 außer dem oberen geführt und überlappt die entsprechenden Bereiche der Fensteröffnung 2. In Fig. 6, 8 und 9 sind zusätzliche Schlitzbereiche 8 an den seitlichen Rändern bzw. am unteren Rand vorgesehen. Die Einspeisung bzw. Auskopplung kann auch an den Schmalseiten der Antennenscheibe erfolgen.

Die Anordnung ist in allen Fällen so getroffen, daß die den Randbereich der Fensteröffnung 2 überlappende Sonnenschutzbeschichtung 7 mit der Karosserie 1 in der beschriebenen Weise hochfrequenzleitend verbunden ist. Der Schlitzbereich 8 zwischen der Sonnenschutzbeschichtung 7 und dem Rand der Fensteröffnung 2 bildet eine Schlitzantenne in der Kraftfahrzeugkarosserie.

Die Antennenscheibe 3 ist im Ausführungsbeispiel und nach bevorzugter Ausführungsform der Erfindung auf besondere Weise gestaltet. Sie besitzt zwischen der Innenglasscheibe 4 und der Außenglasscheibe 5 eine Verbundschicht aus einer ersten Verbundfolie, einer Folie mit elektrisch leitfähiger, insbesondere metallischer Sonnenschutzbeschichtung 7 und einer zweiten Verbundfolie, wobei die Folie mit der Sonnenschutzbeschichtung 7 in der beschriebenen Weise zugeschnitten ist. Der Schlitzbereich 8 mag vom Rand der Sonnenschutzbeschichtung 7 bis zum Rand der Fensteröffnung 2 eine Schlitzantennenbreite von 3 mm bis 200 mm, vorzugweise von etwa 60 mm, aufweisen. In den Figuren ist dieser Schlitzbereich 8 zur besseren Erkennbarkeit übertrieben breit dargestellt. Der Schlitzbereich 8 erstreckt sich im Ausführungsbeispiel von einer Seite der Antennenscheibe 3 zur gegenüberliegenden. Er sollte zumindest eine Länge von 400 mm aufweisen und ist vorzugsweise symmetrisch in bezug auf die Mitte der Fensteröffnung angeordnet. Wird mit einem sehr breiten Schlitzbereich gearbeitet, so kann in diesen eine streifenförmige Sonnenschutzbeschichtung, zum Beispiel als AM-Antenne 12 integriert werden, was nicht gezeichnet wurde. Durch diese Integration wird der für die Erfindung wesentliche Schlitzbereich schmaler.

In den Fig. 6, 8 und 9 erkennt man, daß auch im Bereich des unteren Randes oder der seitlichen Ränder der Antennenscheibe 3 die Sonnenschutzbeschichtung 7 zum entsprechenden Rand der Fensteröffnung 2 hin weitere Schlitzbereiche 8 aufweist, die ebenfalls als Schlitzantenne der Kraftfahrzeugkarosserie wirken.

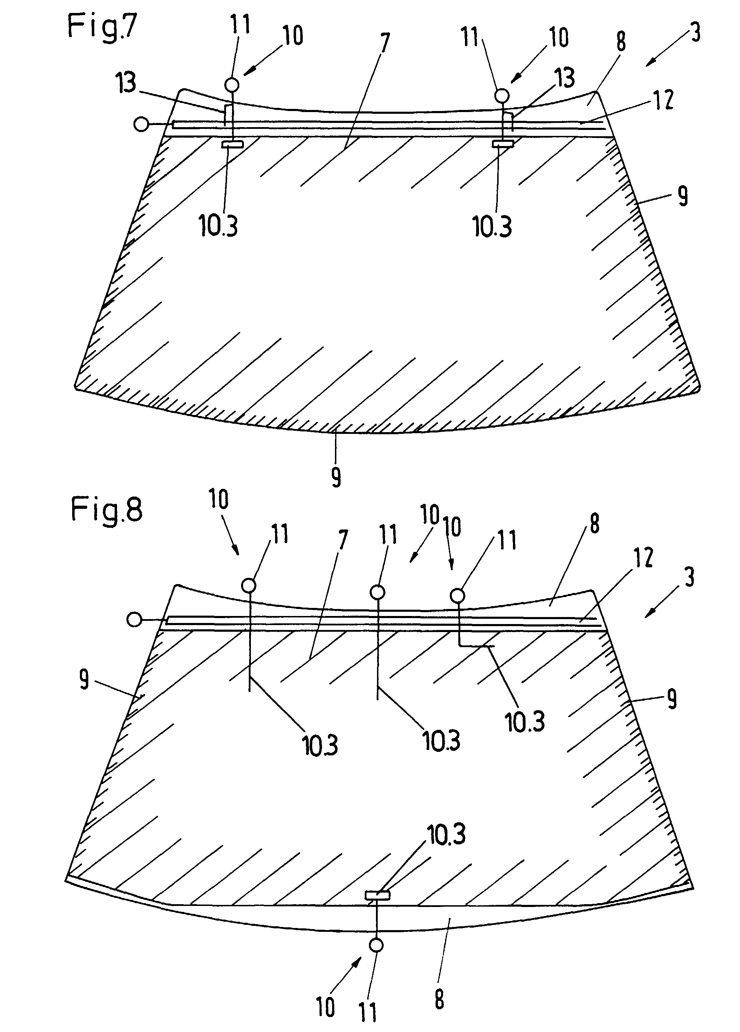

Die Antennenscheibe 3 ist im Ausführungsbeispiel mit zumindest einer kapazitiven Auskopplungs-/Einspeisungs-Einrichtung 10.3 versehen. Diese ist benachbart zum Schlitzbereich 8 an die Sonnenschutzbeschichtung 7 angeschlossen und zu einem Koaxialkabel 10 geführt, dessen Mantel 11 über den Leiter 10.1 mit der Karosserie 1 verbunden ist. Dazu wird noch einmal auf die Fig. 3 verwiesen. Sie macht auch deutlich, daß der Schlitzbereich sich auch als Projektion der Fläche quer zum Pfeil 8 versteht. Im Ausführungsbeispiel nach Fig. 1 besitzt die Schlitzantennenschaltung eine einzige Auskopplungs-/Einspeisungs-Einrichtung 10.3. Sie ist im Bereich der Längsmitte des Schlitzbereichs 8 angeordnet. In den Fig. 4 bis 9 sind mehrere Auskopplungs-/Einspeisungs-Einrichtungen 10.3 vorgesehen, sie sind nach Maßgabe des zu empfangenden oder zu sendenden Frequenzbereichs über die Länge des Schlitzbereichs 8 verteilt. Durch geeignete Anordnung mehrerer solcher Einrichtungen kann die räumliche Sende-/Empfangscharakteristik positiv beeinflußt werden. Die Auskopplungs-/Einspeisungs-Einrichtungen können flächig oder auch - wie in Fig. 8 - linienförmig gestaltet sein.

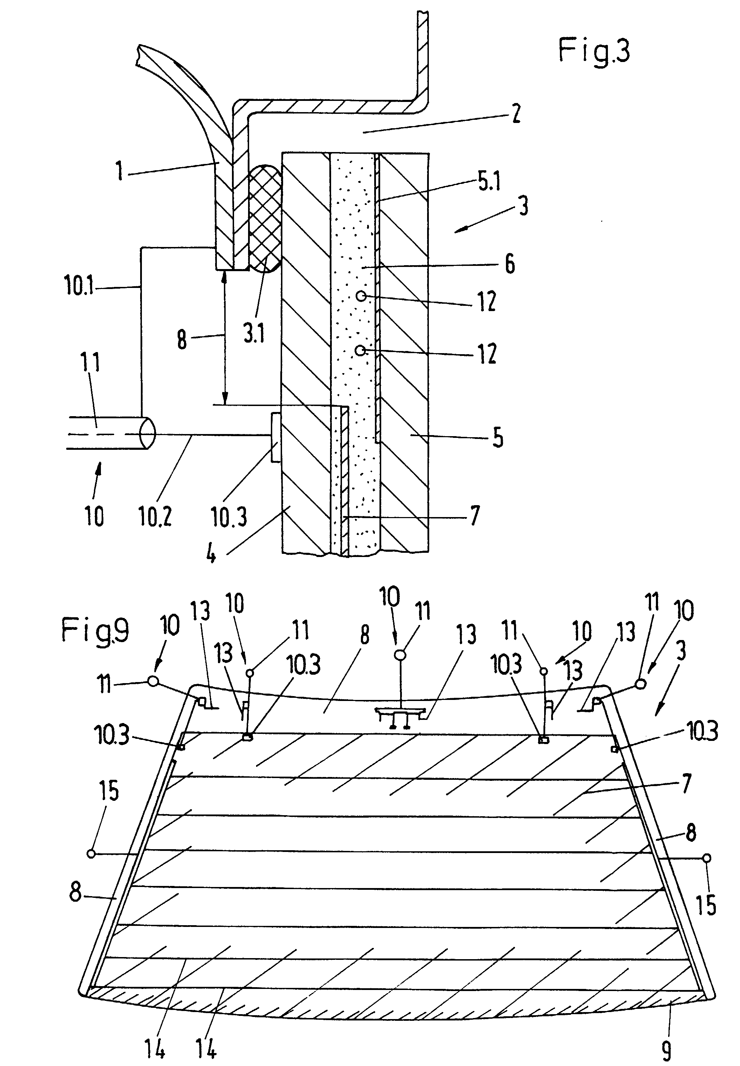

In den Fig. 4 bis 8 erkennt man, daß in dem Schlitzbereich 8 des oberen Randbereichs eine AM-Antenne 12 üblichen Aufbaus zusätzlich angeordnet ist. Sie erstreckt sich über die Länge des Schlitzbereichs 8. In die Fig. 9 wurden die schon erläuterten Bezugszeichen eingetragen. In den Fig.7 und 9 erkennt man fernerhin, daß in dem Schlitzbereich 8 zusätzliche Antennenelemente 13 für hohe Frequenzen angeordnet sind. Dabei dienen die in den oberen Ecken angeordneten Antennenelemente 13 dem TV-Empfang im VHF-Bereich, während in der oberen Scheibenmitte der Fig. 9 in stark vereinfachter Form eine Mehrfrequenz-Mobilfunkantenne mit virtueller Masse dargestellt ist. Die Sonnenschutzbeschichtung 7 kann zusätzlich als Heizfeld mit Gleichstrombeheizung geschaltet sein, es können aber auch im Bereich der Sonnenschutzbeschichtung 7 - beabstandet von dieser - zusätzliche Heizleiter 14 eines Heizfeldes angeordnet sein. Entsprechende Gleichstromanschlüsse 15 gehören zu dem Heizfeld.

In den Figuren ist die Sonnenschutzbeschichtung 7 eine einteilige Schicht. Sie könnte auch in Felder aufgeteilt sein, so daß gleichsam eine Mehrzahl von Antennen entsteht, von denen zumindest einige nach der Lehre der Erfindung eingerichtet sind.

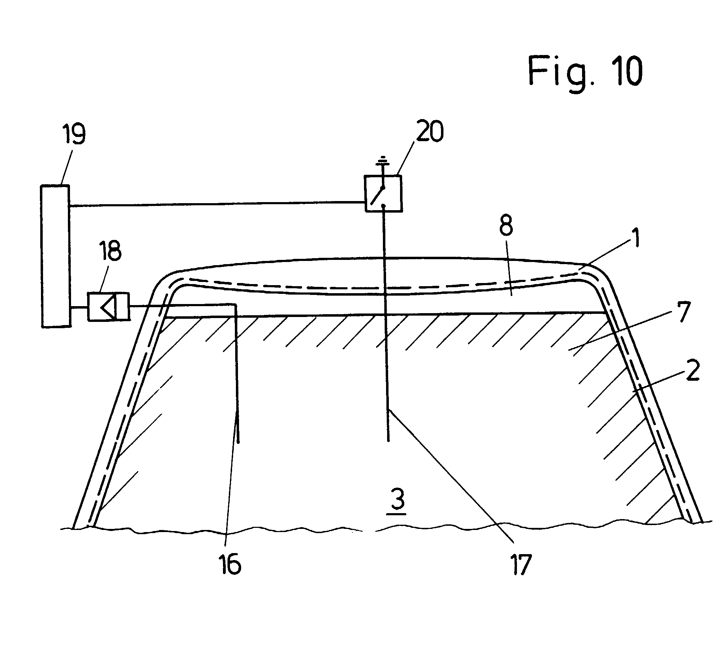

Wie bereits erwähnt, empfiehlt sich die Lehre der Erfindung insbesondere für Ausführungsformen, bei denen die Antenne einem Diversity-System angehört. Das gilt insbesondere für die sogenannte parametrische Diversity. Dazu wird auf die Fig. 10 verwiesen, die eine Ausführungsform darstellt, die an die Ausführungsform nach Fig. 2 anschließt, wobei aber lediglich die für die parametrische Diversity erheblichen Bauteile gezeichnet wurden. Man erkennt eine L-Antenne 16 an der linken Seite und ein parasitäres Strahlerelement 17, im Ausführungsbeispiel in der Mitte der Scheibe. Man erkennt einen Verstärker 18 und die Diversity-Einheit 19 sowie den Schalter 20. Wird dieses parasitäre Strahlerelement mit Hilfe des Schalters 20 einmal offen und einmal kurzgeschlossen betrieben, so ergeben sich unterschiedliche Strombelegungen und unterschiedliche Richtdiagramme. Man kann auch zwei oder mehr Antennen oder Ein-/Auskoppeleinrichtungen vorsehen. Anstelle des Schalters 20 können auch Schaltungselement mit von der Diversity-Einheit gesteuerter variabler Impedanz vorgsehen werden.

Es liegt im Rahmen der Erfindung, quer zum Schlitzbereich 8 angeordnete, mit der Karosserie über Impedanzen verbundene Leiter zur Verkürzung der effektiven Schlitzlänge zu verwenden. Derartige Leiter können auch für Diversity-Zwecke eingesetzt werden, indem eine Diversity-Schaltung die Impedanz zwischen solchen Leitern und der Karosserie-Masse gezielt verändert. Überraschenderweise kann dadurch erreicht werden, daß die Antennencharakteristik bei unveränderter Anordnung der Sonnenschutzbeschichtung allein schaltungstechnisch modifiziert wird (parametrische Diversity).

## Patentansprüche

1. Kraftfahrzeug, insbesondere Personenkraftfahrzeug, mit metallischer Karosserie und zumindest einer Fensteröffnung in der Karosserie, in welcher Fensteröffnung eine Antennenscheibe angeordnet ist, - mit den Merkmalen:
1.1) Die Antennenscheibe besitzt eine Innenscheibe, eine Außenscheibe, eine Verbundschicht und eine optisch transparente, elektrisch leitfähige Sonnenschutzbeschichtung,
1.2) im Bereich von zumindest einem Rand der Antennenscheibe bildet die Sonnenschutzbeschichtung zum entsprechenden Rand der Fensteröffnung hin einen streifenförmigen Schlitzbereich,
1.3) zumindest an einem der gemäß Merkmal 1.2) verbleibenden Ränder der Antennenscheibe ist die Sonnenschutzbeschichtung bis zum Rand der Antennenscheibe geführt und überlappt den entsprechenden Randbereich der Fensteröffnung,
wobei die gemäß Merkmal 1.3) den Randbereich der Fensteröffnung überlappende Sonnenschutzbeschichtung mit der Karosserie hochfrequenzleitend verbunden und der Schlitzbereich zwischen der Sonnenschutzbeschichtung und dem entsprechenden Rand der Fensteröffnung als Schlitzantenne in der Kraftfahrzeugkarosserie geschaltet ist.

2. Kraftfahrzeug nach Anspruch 1, wobei die Antennenscheibe eine Verbundschicht aus einer ersten Verbundfolie, einer Folie mit elektrisch leitfähiger, insbesondere metallischer Sonnenschutzbeschichtung und einer zweiten Verbundfolie aufweist und die Folie mit der Sonnenschutzbeschichtung entsprechend den Merkmalen 1.2) und 1.3) angeordnet ist.

3. Kraftfahrzeug nach einem der Ansprüche 1 oder 2, wobei der Schlitzbereich vom Rand der Sonnenschutzbeschichtung bis zum Rand der Fensteröffnung eine Schlitzantennenbreite von 3 mm bis 200 mm, vorzugsweise von etwa 60 mm, aufweist.

4. Kraftfahrzeug nach einem der Ansprüche 1 bis 3, wobei der Schlitzbereich eine Länge von zumindest 400 mm aufweist.

5. Kraftfahrzeug nach einem der Ansprüche 1 bis 4, wobei der Schlitzbereich symmetrisch in bezug auf die Mitte der Fensteröffnung angeordnet ist.

6. Kraftfahrzeug nach einem der Ansprüche 1 bis 5, wobei sich der Schlitzbereich von einem Rand der Antennenscheibe zum gegenüberliegenden erstreckt.

7. Kraftfahrzeug nach einem der Ansprüche 1 bis 6, wobei die Sonnenschutzbeschichtung an allen Rändern außer dem oberen bis zum Rand der Antennenscheibe geführt ist und die zugeordneten Randbereiche der Fensteröffnung überlappt.

8. Kraftfahrzeug nach einem der Ansprüche 1 bis 7, wobei im Bereich des Unterrandes der Antennenscheibe die Sonnenschutzbeschichtung zum unteren Rand der Fensteröffnung hin einen weiteren unbeschichteten streifenförmigen Schlitzbereich aufweist, der ebenfalls als Schlitzantenne in der Kraftfahrzeugscheibe geschaltet ist.

9. Kraftfahrzeugscheibe nach einem der Ansprüche 1 bis 8, wobei die Antennenscheibe mindestens eine kapazitive Auskopplungs/Einspeisungs-Einrichtung aufweist, die benachbart an den Schlitzbereich überlappend mit der Sonnenschutzbeschichtung angeordnet ist und ein Koaxialkabel aufweist, dessen Mantel mit der Karosserie verbunden ist.

10. Kraftfahrzeug nach Anspruch 9, wobei die Auskopplungs-/Einspeisungs-Einrichtung mit einem Leiterteil den Schlitzbereich überquert.

11. Kraftfahrzeug nach einem der Ansprüche 1 bis 10, wobei die Antennenscheibe eine einzige Auskopplungs-/Einspeisungs-Einrichtung aufweist, die im Bereich der Längsmitte des Schlitzbereichs angeordnet ist.

12. Kraftfahrzeug nach einem der Ansprüche 1 bis 10, wobei die Antennenscheibe zwei oder mehr Auskopplungs-/Einspeisungs-Einrichtungen aufweist, die längs des Schlitzbereiches angeordnet sind.

13. Kraftfahrzeug nach einem der Ansprüche 1 bis 12, wobei in dem Schlitzbereich eine AM-Antenne zusätzlich angeordnet ist, die sich zumindest über einen Teil der Länge des Schlitzbereichs erstreckt.

14. Kraftfahrzeug nach einem der Ansprüche 1 bis 13, wobei in dem Schlitzbereich zusätzliche Antennenelemente für hohe Frequenzen, insbesondere für Mobilfunk, TV, GPS und dergleichen, angeordnet sind.

15. Kraftfahrzeug nach Anspruch 14, wobei die Schlitzantenne bzw. die Schlitzantennen für einen Frequenzbereich von etwa 50 bis 300 MHz und die zusätzlichen Antennenelemente für den Frequenzbereich von etwa 300 MHz bis 2 GHz ausgelegt sind.

16. Kraftfahrzeug nach einem der Ansprüche 1 bis 15, wobei die Sonnenschutzbeschichtung zusätzlich als Heizfeld mit Gleichstrombeheizung geschaltet ist.

17. Kraftfahrzeug nach einem der Ansprüche 1 bis 15, wobei im Bereich der Sonnenschutzbeschichtung mit Abstand von dieser zusätzlich Heizleiter eines Heizfeldes angeordnet sind.

## Claims

1. Motor vehicle, in particular passenger car, with metal body and at least one window opening in the body, in which window opening an antenna pane is arranged - with the following features:
1.1) The antenna pane possesses an inner pane, an outer pane, a laminating layer and an optically transparent, electrically conductive solar control coating,
1.2) In the area of at least one edge of the antenna pane, the solar control coating defines a strip-shaped slot towards the corresponding edge of the window opening,
1.3) On at least one of the remaining edges of the antenna pane according to Feature 1.2), the solar control coating is extended to the edge of the antenna pane and overlaps the corresponding edge area of the window opening,
where the solar control coating overlapping the edge area of the window opening according to Feature 1.3) is connected to the body so as to be conductive to radio frequency and the slot area between the solar control coating and the corresponding edge of the window opening is connected as slot antenna in the motor vehicle body.

2. Motor vehicle in accordance with Claim 1, where the antenna pane incorporates a laminating layer of a first laminating foil, a foil with electrically conductive, in particular metallic solar control coating and a second laminating foil, and the foil with the solar control coating is arranged in accordance with Features 1.2) and 1.3).

3. Motor vehicle in accordance with one of Claims 1 or 2, where the slot area between the edge of the solar control coating and the edge of the window opening has a slot antenna width of 3 mm to 200 mm, preferably of approximately 60 mm.

4. Motor vehicle in accordance with one of Claims 1 to 3, where the slot area possesses a length of at least 400 mm.

5. Motor vehicle in accordance with one of Claims 1 to 4, where the slot area is arranged symmetrically in relation to the centre of the window opening.

6. Motor vehicle in accordance with one of Claims 1 to 5, where the slot area extends from one edge of the antenna pane to the opposite one.

7. Motor vehicle in accordance with one of Claims 1 to 6, where the solar control coating extends at all edges, apart from the top one, to the edge of the antenna pane and overlaps the corresponding edge areas of the window opening.

8. Motor vehicle in accordance with one of Claims 1 to 7, where in the area of the bottom edge of the antenna pane, the solar control coating incorporates a further uncoated strip-shaped slot area facing towards the bottom edge of the window opening, which is also connected as slot antenna in the motor vehicle window.

9. Motor vehicle in accordance with one of claims 1 to 8, where the antenna pane incorporates at least one capacitive output / feeder device which is arranged adjacent to the slot area, overlapping the solar control coating, incorporating a coaxial cable whose sheath is connected to the body.

10. Motor vehicle in accordance with Claim 9, where the output / feeder device crosses the slot area with a conductor section.

11. Motor vehicle in accordance with one of Claims 1 to 10, where the antenna pane incorporates a single output / feeder device which is arranged in the area of the longitudinal centre of the slot area.

12. Motor vehicle in accordance with one of Claims 1 to 10, where the antenna pane incorporates two or more output / feeder devices which are arranged along the slot area.

13. Motor vehicle in accordance with one of Claims 1 to 12, where in the slot area an AM antenna is additionally arranged which extends at least over a part of the length of the slot area.

14. Motor vehicle in accordance with one of Claims 1 to 13, where in the slot area additional antenna elements for high frequencies are arranged, in particular for mobile phone, TV, GPS and the like.

15. Motor vehicle in accordance with Claim 14, where the slot antenna or the slot antennas are designed for a frequency range of approximately 50 to 300 MHz and the additional antenna elements for a frequency range of approximately 300 MHz to 2 GHz.

16. Motor vehicle in accordance with one of Claims 1 to 15, where the solar control coating is additionally connected as a heating panel for direct current heating.

17. Motor vehicle in accordance with one of Claims 1 to 15, where in the area of the solar control coating, additional heater conductors of a heating panel are arranged spaced from it.

## Revendications

1. Véhicule automobile, en particulier véhicule automobile de tourisme, avec une carrosserie métallique et, dans la carrosserie, au moins une ouverture de fenêtre dans laquelle est disposée une vitre-antenne, possédant les caractéristiques suivantes :
1.1) la vitre-antenne possède une vitre intérieure, une vitre extérieure, une couche composite et un revêtement antisolaire optiquement transparent, électriquement conducteur,
1.2) dans la zone d'au moins un bord de la vitre-antenne, le revêtement antisolaire forme, en direction du bord correspondant de l'ouverture de fenêtre, une zone fendue en forme de bande,
1.3) au moins sur un des bords restants de la vitre-antenne selon la caractéristique 1.2), le revêtement antisolaire atteint le bord de la vitre-antenne et recouvre la zone de bord correspondante de l'ouverture de fenêtre,
le revêtement antisolaire qui recouvre la zone de bord de l'ouverture de fenêtre selon la caractéristique 1.3) étant relié à la carrosserie en conduisant les hautes fréquences et la zone fendue entre le revêtement antisolaire et le bord correspondant de l'ouverture de fenêtre étant insérée en tant qu'antenne fendue dans la carrosserie du véhicule automobile.

2. Véhicule automobile selon la revendication 1, dans lequel la vitre-antenne comporte une couche composite constituée d'une première feuille composite, d'une feuille garnie d'un revêtement antisolaire électriquement conducteur, en particulier métallique, et d'une seconde feuille composite, et dans lequel la feuille garnie du revêtement antisolaire est agencée selon les caractéristiques 1.2) et 1.3).

3. Véhicule automobile selon l'une des revendications 1 ou 2, dans lequel, du bord du revêtement antisolaire au bord de l'ouverture de fenêtre, la zone fendue présente une largeur d'antenne fendue de 3 mm à 200 mm, de préférence d'environ 60 mm.

4. Véhicule automobile selon l'une des revendications 1 à 3, dans lequel la zone fendue présente une longueur d'au moins 400 mm.

5. Véhicule automobile selon l'une des revendications 1 à 4, dans lequel la zone fendue est disposée symétriquement par rapport au centre de l'ouverture de fenêtre.

6. Véhicule automobile selon l'une des revendications 1 à 5, dans lequel la zone fendue s'étend d'un bord de la vitre-antenne au bord opposé.

7. Véhicule automobile selon l'une des revendications 1 à 6, dans lequel le revêtement antisolaire atteint le bord de la vitre-antenne sur tous ses bords sauf sur le bord supérieur et recouvre les zones de bord correspondantes de l'ouverture de fenêtre.

8. Véhicule automobile selon l'une des revendications 1 à 7, dans lequel, dans la zone du bord inférieur de la vitre-antenne, le revêtement antisolaire comporte, vers le bord inférieur de l'ouverture de fenêtre, une autre zone fendue en forme de bande non revêtue qui est elle aussi insérée en tant qu'antenne fendue dans la vitre du véhicule automobile.

9. Vitre de véhicule automobile selon l'une des revendications 1 à 8, dans laquelle la vitre-antenne comporte au moins un dispositif capacitif de sortie/entrée qui est disposé au voisinage de la zone fendue en recouvrant le revêtement antisolaire et qui comporte un câble coaxial dont la gaine est reliée à la carrosserie.

10. Véhicule automobile selon la revendication 9, dans lequel le dispositif de sortie/entrée traverse la zone fendue avec une partie conductrice.

11. Véhicule automobile selon l'une des revendications 1 à 10, dans lequel la vitre-antenne comporte un seul dispositif de sortie/entrée qui est disposé dans la zone de l'axe longitudinal de la zone fendue.

12. Véhicule automobile selon l'une des revendications 1 à 10, dans lequel la vitre-antenne comporte deux dispositifs de sortie/entrée ou plus qui sont disposés le long de la zone fendue.

13. Véhicule automobile selon l'une des revendications 1 à 12, dans lequel une antenne AM s'étendant au moins sur une partie de la longueur de la zone fendue est également disposée dans la zone fendue.

14. Véhicule automobile selon l'une des revendications 1 à 13, dans lequel des éléments d'antenne supplémentaires pour hautes fréquences, en particulier pour téléphone mobile, télévision, GPS et analogues, sont disposés dans la zone fendue.

15. Véhicule automobile selon la revendication 14, dans lequel l'antenne fendue ou les antennes fendues sont conçues pour une plage de fréquences d'environ 50 à 300 MHz et les éléments d'antenne supplémentaires sont conçus pour la plage de fréquences d'environ 300 MHz à 2 GHz.

16. Véhicule automobile selon l'une des revendications 1 à 15, dans lequel le revêtement antisolaire fait également fonction de panneau chauffant avec chauffage à courant continu.

17. Véhicule automobile selon l'une des revendications 1 à 15, dans lequel des conducteurs chauffants d'un panneau chauffant sont également disposés dans la zone du revêtement antisolaire, à distance de celui-ci.
